# EUROPEAN PATENT APPLICATION

(11) **EP 4 427 947 A1**
(43) Date of publication of application: **11.09.2024**
(21) Application number: 22889735.1
(22) Date of filing: 11.10.2022
(51) Int. Cl.: B60C 19/00, B60C 1/00, C09D 7/61, C09D 7/63, C09D 107/00

(54) **RFID-TAG COATING RUBBER COMPOSITION, AND TIRE**

(30) Priority: 02.11.2021 JP 2021179847
(71) Applicant: BRIDGESTONE CORPORATION, Chuo-ku Tokyo 104-8340 (JP)
(72) Inventor: SUZUKI, Yoshihiko, Tokyo 104-8340 (JP)
(74) Representative: Marks & Clerk LLP
(86) International application number: PCT/JP2022/037917
(87) International publication number: WO 2023/079912

(57) **Abstract**

An RFID-tag coating rubber composition comprises: a rubber component; sulfur; silica; and a guanidine-based vulcanization accelerator, wherein the sulfur includes insoluble sulfur, and a content of the sulfur is 6.0 parts by mass or more with respect to 100 parts by mass of the rubber component. The RFID-tag coating rubber composition can achieve satisfactory communication performance, satisfactory resistance to cracking, satisfactory adhesiveness to an adjacent rubber member, and satisfactory elastic modulus simultaneously in a well-balanced manner and also is excellent in workability.

## Description

### TECHNICAL FIELD

The present invention relates to an RFID-tag coating rubber composition, and a tire.

### BACKGROUND ART

It has been proposed in the prior art to provide a tire with an RFID (Radio Frequency Identification) tag in/from which various data such as production history, distribution history and use history of the tire can be written/read out, so that the tire is under reliable individual management (PTL 1).
The RFID tag is generally coated with coating rubber, taking it into consideration that the RFID tag is provided in a tire mainly constituted of a rubber member. The coating rubber for the RFID tag needs to satisfy various requirements, in this respect, such as satisfactory communication performance, satisfactory resistance to cracking, satisfactory adhesiveness to an adjacent rubber member, and satisfactory elastic modulus.

### CITATION LIST

### Patent Literature

PTL 1: EP1580041 B1

### SUMMARY OF THE INVENTION

### (Technical Problem)

In view of this, the inventor of the present disclosure studied the conventional coating rubber for the RFID tag and found out that the conventional one cannot achieve satisfactory communication performance, satisfactory resistance to cracking, satisfactory adhesiveness to an adjacent rubber member, and satisfactory elastic modulus simultaneously in a well-balanced manner. For example, when a content of sulfur compounded in a rubber composition for the coating rubber is increased in order to improve elastic modulus of the coating rubber, the sulfur bloom occurs and adhesiveness or tackiness of the rubber composition deteriorates, thereby causing a problem of poor workability in a tire molding process.

An object of the present disclosure is therefore to solve the prior art problems described above and provide an RFID-tag coating rubber composition which can achieve satisfactory communication performance, satisfactory resistance to cracking, satisfactory adhesiveness to an adjacent rubber member, and satisfactory elastic modulus simultaneously in a well-balanced manner and also is excellent in workability.
Further, another object of the present disclosure is to provide a tire provided with an RFID tag and being excellent in communication performance, durability, and productivity.

### (Solution to Problem)

The primary structural features of an RFID-tag coating rubber composition and a tire of the present disclosure for achieving the aforementioned objects are as follows.
[1] An RFID-tag coating rubber composition, comprising:
   a rubber component;
   sulfur;
   silica; and
   a guanidine-based vulcanization accelerator,
   wherein the sulfur includes insoluble sulfur, and
   a content of the sulfur is 6.0 parts by mass or more with respect to 100 parts by mass of the rubber component.
[2] The RFID-tag coating rubber composition of [1], wherein a content of the silica is in the range of 40 to 100 parts by mass with respect to 100 parts by mass of the rubber component.
[3] The RFID-tag coating rubber composition of [1] or [2], wherein the sulfur content is 6.5 parts by mass or more, preferably 6.8 parts by mass or more, with respect to 100 parts by mass of the rubber component.
[4] The RFID-tag coating rubber composition of any of [1] to [3], wherein a content of the guanidine-based vulcanization accelerator is in the range of 0.1 to 1.0 parts by mass with respect to 100 parts by mass of the rubber component.
[5] The RFID-tag coating rubber composition of any of [1] to [4], wherein a ratio of the insoluble sulfur in the sulfur is in the range of 50 to 90 mass %.
[6] The RFID-tag coating rubber composition of any of [1] to [5], wherein the guanidine-based vulcanization accelerator is 1,3-diphenylguanidine (DPG).
[7] A tire, having an RFID tag coated with the RFID-tag coating rubber composition of any of [1] to [6].

### (Advantageous Effect)

According to the present disclosure, it is possible to provide an RFID-tag coating rubber composition which can achieve satisfactory communication performance, satisfactory resistance to cracking, satisfactory adhesiveness to an adjacent rubber member, and satisfactory elastic modulus simultaneously in a well-balanced manner and is excellent in workability as well.
Further, according to the present disclosure, it is possible to provide a tire being excellent in communication performance, durability, and productivity.

### BRIEF DESCRIPTION OF THE DRAWINGS

In the accompanying drawing, wherein:

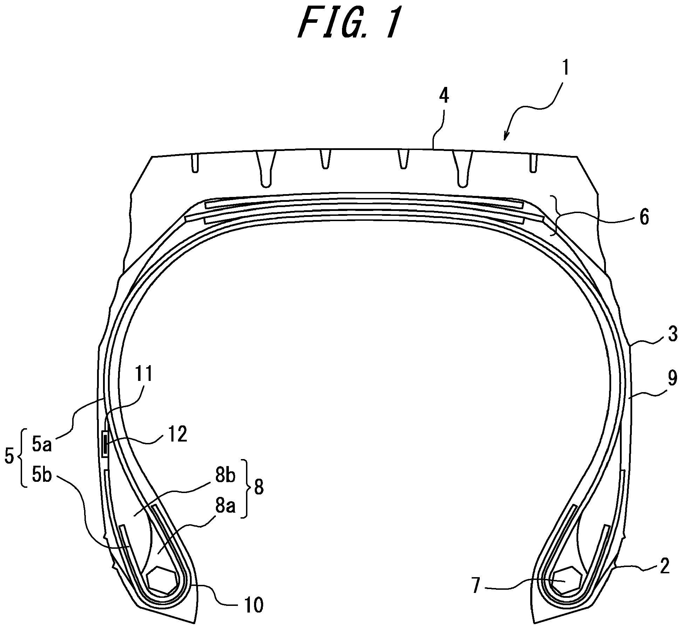

FIG. 1 is a sectional view of a tire of the present disclosure according to an embodiment thereof.

### DETAILED DESCRIPTION

Hereinafter, an RFID-tag coating rubber composition and a tire of the present disclosure will be demonstratively described in detail based on an embodiment thereof.

### < RFID-tag coating rubber composition >

An RFID-tag coating rubber composition of the present disclosure includes therein a rubber component, sulfur, silica, and a guanidine-based vulcanization accelerator, wherein the sulfur includes insoluble sulfur and a content of the sulfur is 6.0 parts by mass or more with respect to 100 parts by mass of the rubber component.

A rubber composition generally contains carbon black therein. Carbon black, however, increases relative permittivity of the rubber composition, thereby causing a reduction of the communicable distance and thus deterioration of communication performance of an RFID tag embedded in the rubber composition. In this regard, resistance to cracking and elastic modulus of the rubber composition will deteriorate if carbon black is simply eliminated from the rubber composition. In view of this, an RFID-tag coating rubber composition of the present disclosure includes therein silica, which does not increase relative permittivity of the rubber composition as carbon black does, whereby the communicable distance of the RFID tag can remain satisfactorily long and thus the communication performance thereof avoids deterioration. Further, inclusion of silica improves resistance to cracking and elastic modulus of the rubber composition.

However, simply replacing carbon black with silica in the rubber composition may still not ensure satisfactory elastic modulus or satisfactory vulcanization property (that is, the vulcanization rate may still not be satisfactorily high). In this respect, the RFID-tag coating rubber composition of the present disclosure, including a guanidine-based vulcanization accelerator therein, can reliably suppress a decrease in elastic modulus and deterioration of the vulcanization property (i.e., a decrease in the vulcanization rate) of the rubber composition. Further, in the present disclosure, since the rubber composition has satisfactory elastic modulus accordingly, it is possible to suppress concentration of stress to the RFID tag coated with the rubber composition, thereby ensuring good adhesion between the rubber composition (the coating rubber) and a rubber member adjacent thereto.

It should be noted that improvement of elastic modulus of the rubber composition can be ensured by setting a content of the sulfur therein to be 6.0 parts by mass or more with respect to 100 parts by mass of the rubber component. If ordinary sulfur (not containing insoluble sulfur) were to be blended by 2.5 parts by mass or more with respect to 100 parts by mass of the rubber component, the sulfur bloom would occur and adhesiveness or tackiness of the rubber composition would deteriorate, thereby resulting in poor workability of the rubber composition in a tire molding process. In contrast, the RFID-tag coating rubber composition of the present disclosure, in which the sulfur includes insoluble sulfur, can suppress occurrence of sulfur bloom and tackiness deterioration of the rubber composition, thereby successfully improving workability of the rubber composition during a tire molding process.

Accordingly, the RFID-tag coating rubber composition of the present disclosure can achieve satisfactory communication performance, satisfactory resistance to cracking, satisfactory adhesiveness to an adjacent rubber member, and satisfactory elastic modulus simultaneously in a well-balanced manner and is excellent in workability as well.

### (Rubber component)

The RFID-tag coating rubber composition of the present disclosure contains therein a rubber component, which imparts rubber elasticity to the composition. The rubber component is preferably diene rubber, which may either be one of natural rubber (NR) and synthetic diene rubber or include both of them. Examples of the synthetic diene rubber include isoprene rubber (IR), styrene-butadiene rubber (SBR), butadiene rubber (BR), styrene-isoprene rubber (SIR), chloroprene rubber (CR), and the like. Either single type or combination (blend) of two or more types of the aforementioned examples may be used as the rubber component.

### (Sulfur)

The RFID-tag coating rubber composition of the present disclosure contains sulfur therein. Inclusion of sulfur in the rubber composition makes the composition vulcanizable, thereby improving physical properties related to resistance to cracking and elastic modulus of the rubber composition.

A content of sulfur is to be 6.0 parts by mass or more with respect to 100 parts by mass of the rubber component. When a content of sulfur is less than 6.0 parts by mass with respect to 100 parts by mass of the rubber component, elastic modulus of the rubber composition fails to increase in a satisfactory manner and resistance to cracking thereof deteriorates.

The sulfur content is preferably ≥ 6.5 parts by mass and more preferably ≥ 6.8 parts by mass with respect to 100 parts by mass of the rubber component. The sulfur content of ≥ 6.5 parts by mass with respect to 100 parts by mass of the rubber component further increases and thus improves resistance to cracking and elastic modulus of the rubber composition. The sulfur content of ≥ 6.8 parts by mass with respect to 100 parts by mass of the rubber component still further increases and thus improves resistance to cracking and elastic modulus of the rubber composition. On the other hand, the sulfur content of < 6.0 parts by mass with respect to 100 parts by mass of the rubber component decreases elastic modulus of the rubber composition, thereby possibly deteriorating durability of a tire.

The sulfur is to contain insoluble sulfur therein. Inclusion of insoluble sulfur in the sulfur suppresses occurrence of sulfur bloom, thereby successfully curbing deterioration of tackiness of the rubber composition and thus improving workability thereof in a molding process of a tire.

The insoluble sulfur is sulfur insoluble to carbon disulfide (amorphous polymeric sulfur), exhibiting lower solubility to the rubber component than soluble sulfur does and thus being less likely to cause bloom.

A ratio of the insoluble sulfur in the sulfur is preferably ≥ 50 mass %, more preferably ≥ 80 mass %, and preferably ≤ 90 mass %. The ratio of the insoluble sulfur in the sulfur of ≥ 50 mass % enhances an effect of suppressing sulfur bloom, thereby successfully further improving workability of the rubber composition in a molding process of a tire. On the other hand, the ratio of the insoluble sulfur in the sulfur of ≤ 50 mass % may result in occurrence of sulfur bloom and thus deterioration of workability of the rubber composition in a tire molding process when the sulfur is blended for the purpose of maintaining a satisfactory elastic modulus. The insoluble sulfur content in the sulfur in the range of 50 mass % to 90 mass % reliably enhances an effect of suppressing sulfur bloom and further improves workability of the rubber composition in a tire molding process.

### (Silica)

The RFID-tag coating rubber composition of the present disclosure contains silica therein. Inclusion of silica in the rubber composition successfully increases and thus improves resistance to cracking and elastic modulus of the rubber composition without a rise in relative permittivity thereof. The relative permittivity of the rubber composition is preferably ≤ 4.0 and more preferably ≤ 2.5 in consideration of maintaining a satisfactorily long communicable distance of the RFID tag.

Examples of the silica include wet silica (hydrated silica), dry silica (anhydrous silica), calcium silicate, aluminum silicate, and the like. Wet silica is preferable among those examples. Either single type or combination of two or more types of the aforementioned examples may be used as the silica.

A content of the silica is preferably ≥ 40 parts by mass and preferably ≤ 100 pars by mass, and more preferably in the range of 60 to 80 parts by mass with respect to 100 parts by mass of the rubber component. A content of the silica of ≥ 60 parts by mass with respect to 100 parts by mass of the rubber component further successfully increases and thus improves resistance to cracking and elastic modulus of the rubber composition. A content of the silica of < 40 parts by mass with respect to 100 parts by mass of the rubber component reduces resistance to cracking of the rubber composition. Accordingly, a content of the silica in the range of 40 to 100 parts by mass with respect to 100 parts by mass of the rubber component reliably further increases and thus improves resistance to cracking and elastic modulus of the rubber composition.

### (Guanidine-based vulcanization accelerator)

The RFID-tag coating rubber composition of the present disclosure contains a guanidine-based vulcanization accelerator therein. Inclusion of the guanidine-based vulcanization accelerator in the rubber composition successfully suppresses a decrease in elastic modulus and deterioration of the vulcanization property (i.e., a decrease in the vulcanization rate) of the rubber composition.

Examples of the guanidine-based vulcanization accelerator include 1,3-diphenylguanidine (DPG), 1,3-di-o-tolylguanidine, 1-(o-tolyl)biguanide, di-(o-tolyl)guanidine salt of bis-catechol borate, 1,3-di-(o-cumenyl)guanidine, 1,3-di-o-biphenylguanidine, 1,3-di-o-cumenyl-2-propyonylguanidine, and the like. Either single type or combination of two or more types of the aforementioned examples may be used as the guanidine-based vulcanization accelerator.

1,3-diphenylguanidine (DPG) is preferable as the guanidine-based vulcanization accelerator. Inclusion of 1,3-diphenylguanidine (DPG) in the rubber composition further successfully increases and thus improves a vulcanization rate, thereby further increasing and thus improving elastic modulus of the rubber composition.

A content of the guanidine-based vulcanization accelerator is preferably ≥ 0.1 parts by mass and preferably ≤ 1.0 pars by mass, and more preferably in the range of 0.3 to 0.7 parts by mass with respect to 100 parts by mass of the rubber component. A content of the guanidine-based vulcanization accelerator of ≥ 0.3 parts by mass with respect to 100 parts by mass of the rubber component further successfully increases and thus improves a vulcanization rate, thereby further increasing and thus improving elastic modulus of the rubber composition. A content of the guanidine-based vulcanization accelerator of < 0.1 parts by mass with respect to 100 parts by mass of the rubber component decreases elastic modulus of the rubber composition. Accordingly, a content of the guanidine-based vulcanization accelerator in the range of 0.1 to 1.0 parts by mass with respect to 100 parts by mass of the rubber component reliably further increases and thus improves a vulcanization rate, thereby reliably further increasing and thus improving elastic modulus of the rubber composition.

### (Other components)

It is preferable that the RFID-tag coating rubber composition of the present disclosure further contains therein a silane coupling agent, oil, and a tackifier, in addition to the rubber component, sulfur, silica, and the guanidine-based vulcanization accelerator described above.

Moreover, various compounding agent components generally employed in the rubber industry such as a filler other than silica, antioxidant, wax, a softening agent other than oil, processing aid, stearic acid, zinc oxide (zinc white), a vulcanization accelerator other than the guanidine-based vulcanization accelerator, a vulcanizing agent other than sulfur, and the like may be optionally selected and added to the RFID-tag coating rubber composition of the present disclosure according to necessity unless the addition thereof adversely affects the objects of the present disclosure. Commercially available products can be suitably used as those compounding agents.

Inclusion of a silane coupling agent in the rubber composition enhances interaction between the rubber component and silica and thus improves dispersibility of silica into the rubber component. The silica, of which dispersibility to the rubber component has been thus improved, can fully demonstrate its effect, thereby further increasing and thus improving elastic modulus and resistance to cracking of the rubber composition.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, (3-mercaptopropyl)trimethoxysilane, (3-mercaptopropyl)triethoxysilane, (2-mercaptoethyl)trimethoxysilane, (2-mercaptoethyl)triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, (3-mercaptopropyl)dimethoxymethylsilane, dimethoxymethylsilylpropyl-N,N-dimethylthiocarbamoyl tetrasulfide, dimethoxymethylsilylpropylbenzothiazolyl tetrasulfide, and the like.

A content of the silane coupling agent is preferably in the range of 5 to 20 mass % (i.e., 5 to 20 parts by mass with respect to 100 parts by mass of the silica) in terms of further improving dispersibility of silica into the rubber component and thereby further increasing and thus improving elastic modulus and resistance to cracking of the rubber composition.

In a case where the rubber composition contains oil therein, doughiness of the rubber composition in a mixing and kneading process improves, which results in better workability of the rubber composition in the mixing and kneading process. The oil mentioned above comprehensively represents: an extender oil contained in the rubber component; and an oil component in a liquid state added as a compounding agent to the rubber composition. Examples of the oil include: a petroleum-based softener such as aromatic oil, paraffinic oil, naphthenic oil; and a plant-based softener such as palm oil, caster oil, cottonseed oil, soybean oil. The petroleum-based softener such as aromatic oil, paraffinic oil, naphthenic oil is preferable among those examples.

Naphthenic oil containing asphalt therein is preferable as the oil. In a case where the rubber composition includes therein naphthenic oil containing asphalt, doughy consistency of the rubber composition in a mixing and kneading process further improves, which results in even better workability of the rubber composition in the mixing and kneading process.

A mixture of naphthenic base oil and asphalt (a mass ratio of naphthenic base oil/asphalt is in the range of 95/5 to 30/70) is preferable as the naphthenic oil containing asphalt therein. Compatibility of the rubber component with the oil further improves when the mass ratio of naphthenic base oil/asphalt is within the range described above. Hydrogenated naphthenic base oil is preferable and hydrogenated naphthenic base oil obtained by highly hydrorefining aromatic oil or naphthenic oil by a high pressure-high temperature hydrorefining equipment is particularly preferable as the naphthenic base oil. Specifically, such hydrogenated naphthenic base oil as described above is available as a commercial product like "SNH8^{®}", "SNH46^{®}", "SNH220^{®}", "SNH440^{®}", or the like manufacturd by SANKYO YUKA KOGYO K.K..

A content of asphaltene component in the asphalt mixed with the naphthenic base oil is preferably 5 mass % or less in consideration of obtaining good compatibility of the asphalt with the rubber component in use and satisfactory doughiness of the rubber composition in a mixing and kneading process. A content of the asphaltene component is quantitatively determined from composition analysis carried out according to a method of the JPI Standard [The Japan Petroleum Institute Standard: JPI-5S-22-83 (1983), Standard Name "Fractioned Analysis for Asphaltic Bitumen by Column Chromatography"].

The asphalt described above is preferably straight asphalt and particularly preferably naphthenic straight asphalt. Further, the asphalt described above preferably has kinematic viscosity of ≤ 300 mm²/second at 120°C.

A method for mixing the asphalt as described above with the naphthenic base oil, which is not particularly restricted, preferably includes dissolving the asphalt in a naphthenic base oil (as extender oil, compounded oil, or the like), in consideration of easiness and economic efficiency of the preparation.

Examples of the naphthenic oil containing asphalt therein described above include the product name "A/O MIX" manufactured by SANKYO YUKA KOGYO K.K., obtained by mixing a hydrogenated naphthenic base oil prepared by a high pressure-high temperature hydrorefining equipment, with a naphthenic straight asphalt having an asphaltene content of ≤ 5 mass %, at a mixing mass ratio of 63/37.

A content of the oil is preferably > 0 parts by mass and ≤ 15 parts by mass with respect to 100 parts by mass of the rubber component in terms of further improving doughy consistency of the rubber composition and thereby further improving workability thereof in a mixing and kneading process.

Tackiness of the rubber composition improves and thus workability of the rubber composition in a tire molding process improves, as well, when the rubber composition contains a tackifier therein. Various types of natural resins and synthetic resins can be used as the tackifier. Specifically, rosin resin, terpene resin, petroleum resin, phenolic resin, coal-derived resin, and xylene resin are preferably used as the tackifier. Either single type or combination of two or more types of the aforementioned examples may be used as the tackifier. Tackiness of the rubber composition further improves and thus workability of the rubber composition in a tire molding process further improves, as well, when the rubber composition contains as a tackifier therein at least one selected from the group consisting of rosin resin, terpene resin, petroleum resin, phenolic resin, coal-derived resin, and xylene resin.

Examples of the rosin resin, as the natural resin for the tackifier, include gum rosin, tall oil resin, wood resin, hydrogenated rosin, disproportionated resin, polymerized resin, glycerol ester of a modified rosin, pentaerythritol ester of a modified resin, and the like.

Examples of the terpene resin, as the natural resin for the tackifier, include: terpene resin such as α-pinene resin, β-pinene resin, dipentene; aromatic modified terpene resin; terpene phenolic resin; hydrogenated terpene resin; and the like. Polymerized resin, terpene phenolic resin and hydrogenated terpene resin are preferable among those examples of the natural resin in terms of ensuring satisfactory fracture resistance of the rubber composition with which the natural resin is compounded.

The petroleum resin as a synthetic resin for the tackifier is obtained, for example, by polymerizing by using a Friedel-Crafts catalyst a mixture of decomposed oil fractions containing unsaturated hydrocarbons such as olefins and diolefins generated as byproducts together with petrochemical basic raw materials such as ethylene, propylene, and the like as a result of thermal decomposition of naphtha in the petrochemical industry. Examples of the petroleum resin include: aliphatic petroleum resin obtained by (co)polymerizing the Cs fractions derived from thermal decomposition of naphtha (which resin will occasionally be referred to as "Cs resin" hereinafter); aromatic petroleum resin obtained by (co)polymerizing the C₉ fractions derived from thermal decomposition of naphtha (which resin will occasionally be referred to as "C₉ resin" hereinafter); copolymerized petroleum resin obtained by copolymerizing the C₅ fractions and the C₉ fractions (which resin will occasionally be referred to as "C₅-C₉ resin" hereinafter); hydrogenated petroleum resin; petroleum resin derived from an alicyclic compound such as dicyclopentadiene; styrene resin derived from styrene, substituted styrene, or a copolymer of styrene and another monomer; and the like.

Examples of the C₅ fractions derived from thermal decomposition of naphtha generally include: olefin hydrocarbons such as 1-pentene, 2-pentene, 2-methyl-1-butene, 2-methyl-2-butene, 3-methyl-1-butene; diolefin hydrocarbons such as 2-methyl-1,3-butadiene, 1,2-pentadiene, 1,3-pentadiene, 3-methyl-1,2-butadiene; and the like. The aromatic petroleum resin obtained by (co)polymerizing the C₉ fractions is specifically a resin obtained by polymerizing C₉ aromatic compounds primarily constituted of vinyl toluene and/or indene as constituent monomers. Specific examples of the C₉ fractions derived from thermal decomposition of naphtha include: styrene homologue such as α-methylstyrene, β-methylstyrene, γ-methylstyrene; indene homologue such as indene, coumarone; and the like. Examples of the relevant product names include "PETROSIN" manufactured by Mitsui Petrochemical Industries, "PETRITE" manufactured by Mikuni Chemical Industry Co., Ltd., "NEOPOLYMER" manufactured by Nippon Petrochemicals Co., Ltd., "PETCOAL" manufactured by Tosoh Corporation, and the like.

Further, a modified petroleum resin obtained by modifying a petroleum resin derived from the C₉ fractions can be suitably used in consideration of workability. Examples of the modified petroleum resin include a C₉ petroleum resin modified by an unsaturated alicyclic compound, a C₉ petroleum resin modified by a compound having hydroxyl group, a C₉ petroleum resin modified by an unsaturated carboxylic compound, and the like.

Preferable examples of the unsaturated alicyclic compound include cyclopentadiene, methylcyclopentadiene, and the like. Further, a Diels-Alder reaction product of alkylcyclopentadiene is also preferable as the unsaturated alicyclic compound. Examples of the Diels-Alder reaction product of alkylcyclopentadiene include dicyclopentadiene, cyclopentadiene/methylcyclopentadiene codimer, tricyclopentadiene, and the like. Dicyclopentadiene is particularly preferable as the unsaturated alicyclic compound. A C₉ petroleum resin modified by dicyclopentadiene can be obtained, for example, by thermal polymerization under the presence of both dicyclopentadiene and the C₉ fractions. Examples of the C₉ petroleum resin modified by dicyclopentadiene include "NEOPOLYMER 130S" manufactured by Nippon Petrochemicals Co., Ltd.

Examples of the compound having hydroxyl group described above include an alcohol compound, a phenolic compound, and the like. Specific examples of the alcohol compound include an alcohol compound having a double bond such as allyl alcohol, 2-butene-1,4-diol, and the like. Examples of the phenolic compound which can be used include phenol and alkylphenols such as cresol, xylenol, p-tert-butylphenol, p-octylphenol, p-nonylphenol, and the like. Either single type or combination of two or more types of the aforementioned examples may be used as the compound having hydroxyl group. A C₉ petroleum resin having hydroxyl group can be manufactured by, for example, i) a method including: introducing an ester group into a petroleum resin by thermal polymerization of an alkyl ester of (metha)acrylic acid and petroleum fractions; and then reducing the ester group, and ii) a method including protecting/introducing a double bond in a petroleum resin and then hydrating the double bond. Although any of the C₉ petroleum resin having hydroxyl group obtained by the various methods as described above can be used, a petroleum resin modified by phenol is preferable as the C₉ petroleum resin having hydroxyl group, in consideration of advantages in the production processes and performances thereof. The petroleum resin modified by phenol, which can be obtained by cationic polymerization of the C₉ fractions under the presence of phenol, is advantageous because the modification process involved therewith is easy, whereby the resin is inexpensive. Examples of the phenol-modified C₉ petroleum resin include "NEOPOLYMER-E-130" manufactured by Nippon Petrochemicals Co., Ltd.

The C₉ petroleum resin modified by an unsaturated carboxylic compound as described above can be obtained by modifying a C₉ petroleum resin with an ethylenic unsaturated carboxylic acid. Typical examples of the ethylenic unsaturated carboxylic acid include maleic acid, maleic anhydride, fumaric acid, itaconic acid, tetrahydrophthalic acid, tetrahydrophthalic anhydride, (metha)acrylic acid, citraconic acid, and the like. The C₉ petroleum resin modified by an unsaturated carboxylic acid can be obtained by thermal polymerization of a C₉ petroleum resin and an ethylenic unsaturated carboxylic acid. A C₉ petroleum resin modified by maleic acid is preferable as the C₉ petroleum resin modified by an unsaturated carboxylic acid in the present disclosure. Examples of the C₉ petroleum resin modified by an unsaturated carboxylic acid include "NEOPOLYMER-160" manufactured by Nippon Petrochemicals Co., Ltd.

A copolymerized resin of the C₅ fractions and the C₉ fractions which are obtained by thermal decomposition of naphtha can be suitably used as the petroleum resin. The C₉ fractions, of which type is not particularly restricted, are preferably the C₉ fractions obtained by thermal decomposition of naphtha. Specific examples of the C₅-C₉ resin include "TS30", "TS30-DL", "TS35", "TS35-DL" of "STRUCTOL^{®}" series manufactured by Schill+Seilacher GmbH.

Examples of the phenolic resin as a synthetic resin for the tackifier include: alkylphenol-formaldehyde resin and a rosin-modified derivative thereof; alkylphenolacetylene resin; modified alkyl phenolic resin; terpene phenolic resin; and the like. More specific examples of the phenolic resin include "Hitanol^{®} 1502" (novolak type alkyl phenolic resin) manufactured by Hitachi Chemical Company, Ltd., "Koresin^{®}" (p-tert-butylphenol-acetylene resin) manufactured by BASF SE, and the like.

Examples of the coal-derived resin as a synthetic resin for the tackifier include coumarone-indene resin and the like and examples of the xylene resin as a synthetic resin for the tackifier include xylene-formaldehyde resin and the like. Further, polybutene is also applicable as a resin having tackiness.

A content of the tackifier is preferably > 0 parts by mass and ≤ 10 parts by mass with respect to 100 parts by mass of the rubber component in terms of further improving tackiness of the rubber composition and thereby further improving workability thereof in a mixing and kneading process of a tire.

The RFID-tag coating rubber composition of the present disclosure may either include or exclude carbon black in/from the filler(s) other than silica. A content of the carbon black is preferably ≤ 20 parts by mass and particularly preferably 0 parts by mass (i.e., the rubber composition contains no carbon black) with respect to 100 parts by mass of the rubber component in the present disclosure. The carbon black content of ≤ 20 parts by mass with respect to 100 parts by mass of the rubber component ensures a decrease in relative permittivity of the rubber composition and thus an increase in the communicable distance of the RFID tag. The carbon black content of 0 parts by mass with respect to 100 parts by mass of the rubber component (i.e., the rubber composition contains no carbon black) ensures a further decrease in relative permittivity of the rubber composition and thus a further increase in the communicable distance of the RFID tag.

### (Method for manufacturing rubber composition)

A method for manufacturing the rubber composition described above is not particularly restricted. The rubber composition can be manufactured, for example, by: blending, mixing and kneading the aforementioned rubber component, sulfur, silica, and the guanidine-based vulcanization accelerator, and various other components optionally selected according to necessity; and subjecting the mixture thus mixed and kneaded, to warming, extrusion, and the like. Further, a vulcanized rubber can be obtained by vulcanizing the rubber composition thus obtained.

Conditions during the mixing and kneading process are not particularly restricted. Various relevant conditions such as a volume of a raw material to be charged into a kneader, rotational speed of a rotor, ram pressure, temperature and time period in the mixing and kneading process, type of a kneader, and the like can be optionally selected according to the purpose. Examples of the kneader include Banbury mixer, intermix machine, kneader, rolls, and the like, which are generally employed for mixing and kneading of a rubber composition.

Conditions of the warming are not particularly restricted, either. Various relevant conditions such as temperature and time period in the warming process, type of a warming device, and the like can be optionally selected according to the purpose. Examples of the warming device include warming rolls and like, which are generally employed for warming of a rubber composition.

Conditions of the extrusion are not particularly restricted, either. Various relevant conditions such as extrusion time, extrusion speed, type of an extruder, temperature in the extrusion process, and the like can be optionally selected according to the purpose. Examples of the extruder include an extruder or the like, which is generally employed for extrusion of a rubber composition. The temperature during the extrusion process may be optionally set as required.

Details of a device, a method, conditions, and the like for vulcanization are not particularly restricted and may be optionally decided/selected according to the purpose. Examples of a vulcanizing device include a vulcanizing molding machine provided with a die, which is generally employed for vulcanization of a rubber composition. Temperature, as a condition during the vulcanization process, is, for example, in the range of 100 °C to 190 °C or so.

### < Tire >

A tire of the present disclosure characteristically includes therein an RFID tag coated with the RFID-tag coating rubber composition described above. The tire of the present disclosure is excellent in communication performance, durability, and productivity because it includes therein an RFID tag coated with the RFID-tag coating rubber composition described above.

The RFID tag is generally formed by a material such as metal, resin, or the like. For example, an RFID tag has an electronic device portion and an antenna portion connected with the electronic device portion, wherein a package of the electronic device portion is made of resin and the antenna portion is made of metal, in an embodiment thereof. In a case where the RFID tag is coated with the aforementioned RFID-tag coating rubber composition of the present disclosure in the embodiment, satisfactory adhesion between the RFID tag and the coating rubber can be ensured by pre-coating the RFID tag in advance (prior to the coating with the RFID-tag coating rubber composition) with an adhesive such as product name "Chemlok^{®}" manufactured by LORD Corporation.

The RFID tag is relatively hard as compared with other rubber members in the tire. Therefore, it is preferable that the coating rubber of the RFID tag has higher elastic modulus (i.e., is harder) than a rubber member adjacent thereto (for example, side rubber, stiffener, or the like described below) in order to suppress concentration of stress on the RFID tag. In this respect, the RFID-tag coating rubber composition described above, having high elastic modulus and thus being hard, reliably causes an effect of suppressing concentration of stress on the RFID tag.

The RFID tag is provided in the tire preferably in a portion thereof experiencing relatively small strain during running of the tire. It is preferable in an embodiment that an RFID tag coated with the RFID-tag coating rubber composition described above is provided between a stiffener disposed on the tire radially outer side of a bead core embedded in a bead portion of the tire and a side rubber disposed on the tire widthwise outer side of a carcass in a side portion of the tire. In this respect, it is more preferable in the embodiment that the RFID tag coated with the RFID-tag coating rubber composition is provided at a position on the inner side in the tire radial direction from the maximum width portion of the tire.

FIG. 1 is a sectional view of a tire of the present disclosure according to an embodiment thereof.

The tire 1 shown in FIG. 1 has: a pair of bead portions 2; a pair of side portions 3; a tread portion 4 continuous with the respective side portions 3; a carcass 5 extending in a toroidal shape across the pair of bead portions 2, for reinforcing the bead portions 2, the side portions 3 and the tread portion 4; a belt 6 disposed on the outer side in the tire radial direction of a crown portion of the carcass 5; and a stiffener 8 disposed on the outer side in the tire radial direction of a ring-shaped bead core 7 embedded in each of the bead portions 2.

The stiffener 8 includes therein: a hard stiffener 8a having relatively high rigidity and being adjacent to the corresponding bead core 7 on the outer side in the tire radial direction of the bead core 7; and a soft stiffener 8b having relatively low rigidity and being adjacent to the corresponding hard stiffener 8a on the outer side in the tire radial direction of the hard stiffener 8a.

A side rubber 9 is provided on the outer side in the tire widthwise direction of the carcass 5 in each side portion 3.

In the tire 1 shown as an example in the drawing, the carcass 5 has: a main body portion 5 a extending in a toroidal shape across the pair of bead cores 7; and a turn-up portion 5b wound up around each bead core 7 from the inner side toward the outer side in the tire widthwise direction and then toward the outer side in the tire radial direction of the bead core 7. It should be noted that the structure and the number of plies of the carcass 5 are not limited to those shown in FIG. 1. The stiffener 8 is disposed between the main body portion 5a and each of the turn-up portions 5b. A wire chafer 10 is disposed on the outer surface side of each turn-up portion 5b of the carcass 5. The wire chafer 10 extends along the stiffener 8 on the outer surface side in the tire widthwise direction of the stiffener 8.

A RFID tag 12 coated with coating rubber 11 is provided on the outer side in the tire radial direction of the wire chafer 10 between the side rubber 9 and the soft stiffener 8b at a position on the inner side in the tire radial direction from the maximum width portion of the tire. The RFID-tag coating rubber composition described above is used for the coating rubber 11 in the present embodiment.

The RFID tag 12 coated with the coating rubber 11 (the RFID tag-rubber composite) can be prepared by, for example, interposing the RFID tag 12 between two rubber sheets made of the RFID-tag coating rubber composition described above. The tire of the present embodiment can be manufactured by: laminating the relevant rubber members and the RFID tag-rubber composite, thereby building a green tire; and subjecting the green tire to vulcanization.

The tire 1 shown in FIG. 1 allows a satisfactorily long communicable distance and is excellent in communication performance because the rubber composition applied to the coating rubber 11 demonstrates good communication performance as described above.

Further, the tire shown in FIG. 1 exhibits excellent durability because the rubber composition applied to the coating rubber 11 can achieve satisfactory resistance to cracking, satisfactory adhesiveness to an adjacent rubber member, and satisfactory elastic modulus simultaneously in a well-balanced manner as described above.

Yet further, the tire shown in FIG. 1 can achieve high productivity because the rubber composition applied to the coating rubber 11 is excellent in workability as described above.

The tire of the present embodiment may be manufactured, depending on the tire type for the application, by either i) molding the aforementioned rubber composition in an unvulcanized state and subjecting a resulting green tire to vulcanization or ii) subjecting the aforementioned rubber composition to a preliminary vulcanization process, molding a resulting half-vulcanized rubber, and subjecting a resulting tire to a main vulcanization process. The tire of the present disclosure is preferably a pneumatic tire, wherein examples of gas with which the tire is to be inflated include inert gas such as nitrogen, argon, helium or the like, as well as ambient air and air of which oxygen partial pressure has been adjusted.

### EXAMPLES

The present disclosure will be described further in detail by Examples hereinafter. The present disclosure is not limited by any means to these Examples.

### < Preparation of rubber composition >

Each of unvulcanized rubber composition samples of Examples and Comparative Examples was obtained by:
charging the blending components, excluding a vulcanization accelerator, a vulcanizing agent and other "Pro" chemical agents, according to the blending formulation thereof shown in Table 1 at a charging rate in the range of 55 % to 65 % in a 1.7 L Banbury mixer manufactured by Kobe Steel, Ltd.;
mixing and kneading the mixture at a rotational speed of 80 rpm until either the temperature of the mixture reached 160 °C or four minutes passed after the start of mixing and kneading;
then adding a vulcanization accelerator, a vulcanizing agent and other "Pro" chemical agents, by the amounts according to the blending formulation shown in Table 1, to the mixture thus mixed and kneaded; and
further mixing and kneading the resulting mixture for two minutes at 80 °C by using open rolls, thereby obtaining the unvulcanized rubber composition sample. Further, a plate-shaped crosslinked rubber composition sample was prepared by vulcanizing the unvulcanized rubber composition sample thus obtained, at 145 °C for 45 minutes.

### < Evaluation of rubber composition >

Communication performance, resistance to cracking, adhesiveness to an adjacent rubber member, elastic modulus, and workability were evaluated for each of the rubber composition samples of Examples and Comparative Examples thus obtained by the respective methods described below. The results are shown in Table 1.

### (1) Communication performance

A relative permittivity of the rubber composition is measured for each of the plate-shaped vulcanized rubber composition samples at 860 MHz by using a relative permittivity analyzer. It is known from the measurement results of relative permittivity in the past that a relative permittivity of a rubber composition can be deduced from an amount of carbon black blended therein. Accordingly, a relative permittivity of the rubber composition is obtained by calculation in the present disclosure.

### (2) Resistance to cracking

Resistance to cracking of the rubber composition was determined for each of the plate-shaped vulcanized rubber composition samples by:
preparing a JIS No. 5 test specimen having thickness of 2 mm from the plate-shaped vulcanized rubber composition sample and forming a crack of 0.5 mm length at the center of the test specimen; and
gripping the respective ends of the test specimen, exerting a force on the test specimen repeatedly under the conditions described below, counting the number of force exertions required before fracture of the test specimen, and regarding the number thus counted as resistance to cracking of the rubber composition.

Test stress: 1.9 N · m
Frequency: 5 Hz
Temperature of atmosphere: 80 °C

The number of force exertions required before fracture of the test specimen, thus counted, was rounded to the nearest hundred, and the value thus rounded is shown in Table 1.

The larger number of force exertions required before fracture of the test specimen represents the higher resistance to crack growth of the test specimen, i.e., the higher resistance to crack growth of a sample tire formed by the vulcanized rubber of the test specimen. Resistance to crack growth of the test specimen is regarded as excellently high when the number of force exertions required before fracture of the test specimen is ≥ 10,000.

### (3) Durability (E')

Dynamic modulus (E') of the rubber composition was measured for each (test specimen) of the plate-shaped vulcanized rubber composition samples by using a spectrometer (manufactured by Ueshima Seisakusho Co., Ltd.) under the conditions of temperature: 24 °C, strain: 1 %, and frequency: 52 Hz.

The larger dynamic modulus (E') represents the higher hardness, the less deformability, and thus the better durability of the rubber, i.e., the better durability of a sample tire formed by the vulcanized rubber of the test specimen. Further, a vulcanized rubber having high dynamic modulus (E') can effectively curb concentration of stress on an RFID tag, thereby ensuring satisfactory adhesion thereof to an adjacent rubber member.

### (4) Elastic modulus (M100) of vulcanized rubber

The value of modulus at 100 % elongation (M100) was measured for each (test specimen) of the plate-shaped vulcanized rubber composition samples.

Specifically, the value of modulus at 100 % elongation (M100) was measured according to JIS K 6251 (2017) as tensile elastic modulus (MPa) of a vulcanized rubber test specimen having thickness of 2 mm (prepared from the plate-shaped vulcanized rubber composition sample) when the test specimen was stretched at 100 % elongation at 25 °C. The larger value of elastic modulus (M100) represents the less deformability and thus the better durability of the rubber, i.e., the better durability of a sample tire formed by the vulcanized rubber of the test specimen. Further, a vulcanized rubber having high elastic modulus (M100) can effectively curb concentration of stress on an RFID tag, thereby ensuring satisfactory adhesion thereof to an adjacent rubber member.

### (5) Workability

Workability of the rubber composition was determined by: storing each of the unvulcanized rubber composition samples with smooth rubber surfaces, obtained by mixing and kneading the relevant mixture for two minutes at 80 °C by using open rolls, in a thermostatic chamber at 40 °C for two weeks; and then visually observing absence/presence of sulfur bloom at the surfaces of the unvulcanized rubber composition sample. The unvulcanized rubber composition sample, of which surfaces became white due to occurrence of sulfur bloom, tends to exhibit significantly deteriorated rubber adhesiveness, which possibly renders the subsequent tire-building work difficult.

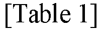

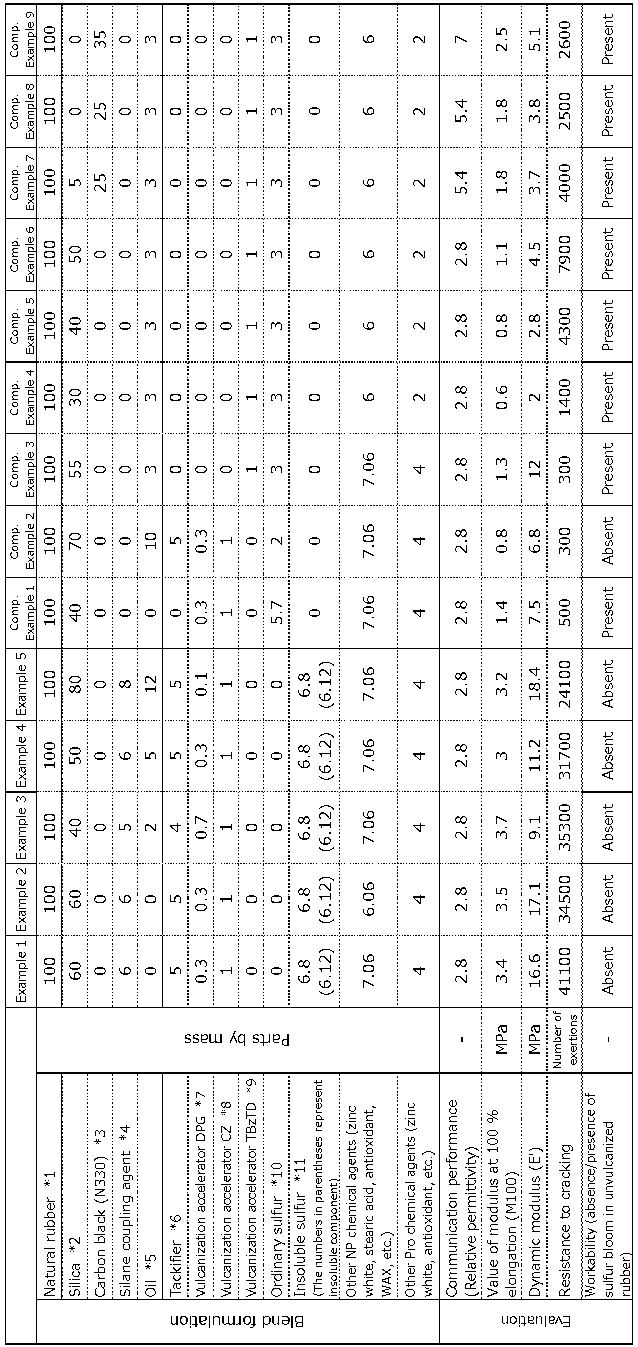

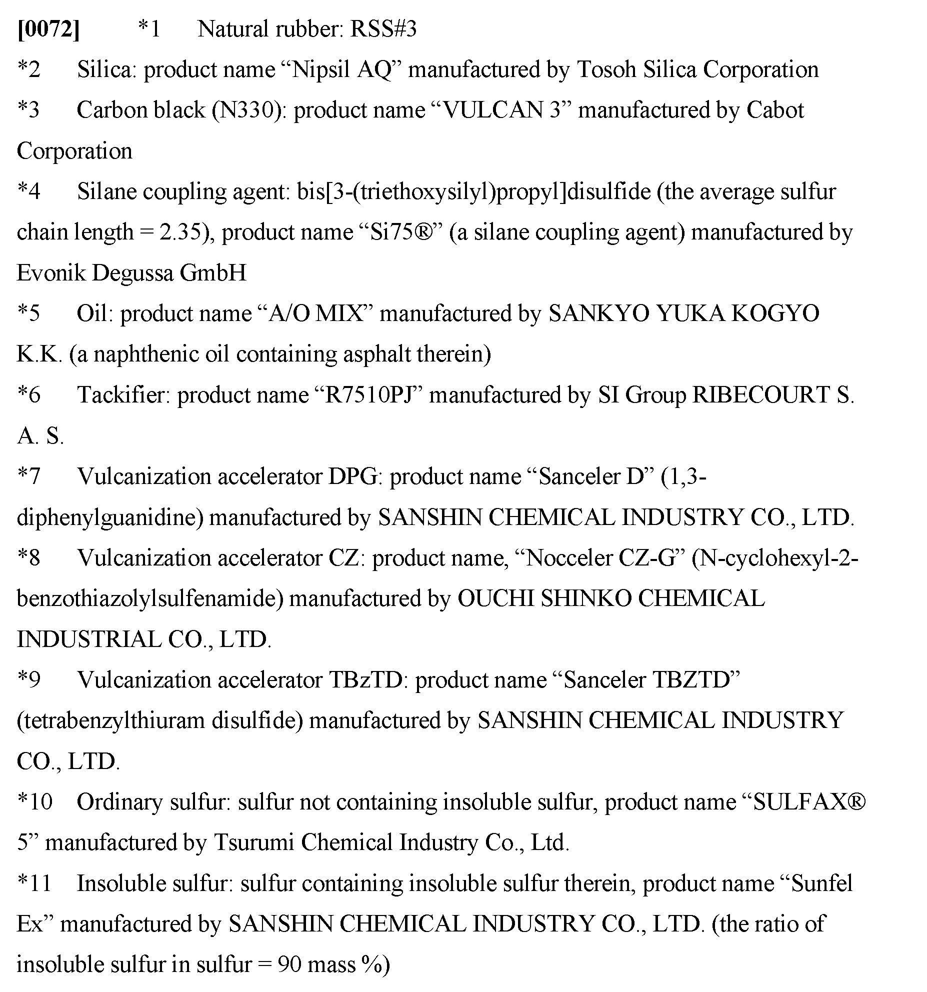

It is understood from Table 1 that each of the rubber compositions of the Examples according to the present disclosure can achieve satisfactory communication performance, satisfactory resistance to cracking, satisfactory adhesiveness to an adjacent rubber member, and satisfactory elastic modulus simultaneously in a well-balanced manner and also is excellent in workability.

### REFERENCE SIGNS LIST

- 1:: Tire
- 2:: Bead portion
- 3:: Side portion
- 4:: Tread portion
- 5:: Carcass
- 5a:: Main body portion of carcass
- 5b:: Turn-up portion of carcass
- 6:: Belt
- 7:: Bead core
- 8:: Stiffener
- 8a: Hard stiffener
- 8b:: Soft stiffener
- 9:: Side rubber
- 10:: Wire chafer
- 11:: Coating rubber
- 12:: RFID tag

## Claims

1. An RFID-tag coating rubber composition, comprising:
a rubber component;
sulfur;
silica; and
a guanidine-based vulcanization accelerator,
wherein the sulfur includes insoluble sulfur, and
a content of the sulfur is 6.0 parts by mass or more with respect to 100 parts by mass of the rubber component.

2. The RFID-tag coating rubber composition of claim 1, wherein a content of the silica is in the range of 40 to 100 parts by mass with respect to 100 parts by mass of the rubber component.

3. The RFID-tag coating rubber composition of claim 1 or 2, wherein the sulfur content is 6.8 parts by mass or more with respect to 100 parts by mass of the rubber component.

4. The RFID-tag coating rubber composition of any of claims 1 to 3, wherein a content of the guanidine-based vulcanization accelerator is in the range of 0.1 to 1.0 parts by mass with respect to 100 parts by mass of the rubber component.

5. The RFID-tag coating rubber composition of any of claims 1 to 4, wherein a ratio of the insoluble sulfur in the sulfur is in the range of 50 to 90 mass %.

6. The RFID-tag coating rubber composition of any of claims 1 to 5, wherein the guanidine-based vulcanization accelerator is 1,3-diphenylguanidine, i.e., DPG.

7. A tire, having an RFID tag coated with the RFID-tag coating rubber composition of any of claims 1 to 6.
